# EUROPÄISCHE PATENTSCHRIFT

(11) **EP 2 601 040 B1**
(45) Veröffentlichungstag und Bekanntmachung des Hinweises auf die Patenterteilung: **28.06.2017**
(21) Anmeldenummer: 11741404.5
(22) Anmeldetag: 08.07.2011
(51) Int. Cl.: B29C 70/08, B60R 13/02, B29C 70/00, D06P 1/44, B29L 31/30

(54) **VERFAHREN ZUM HERSTELLEN EINES EINGEFÄRBTEN FASERVERBUNDWERKSTOFFES UND SOLCHER FASERVERBUNDWERKSTOFF SOWIE DARAUS HERGESTELLTES UMFORMTEIL**
PROCESS FOR PRODUCING A COLOURED FIBRE COMPOSITE MATERIAL AND THIS FIBRE COMPOSITE MATERIAL, AND FORMED PART PRODUCED THEREFROM
PROCÉDÉ DE FABRICATION D'UN MATÉRIAU COMPOSITE RENFORCÉ PAR FIBRES, COLORÉ, MATÉRIAU COMPOSITE RENFORCÉ PAR FIBRES ET PIÈCE FAÇONNÉE FABRIQUÉE À PARTIR DE CE MATÉRIAU

(30) Priorität: 20.09.2010 DE 102010045834; 02.08.2010 DE 102010033096
(43) Veröffentlichungstag der Anmeldung: 12.06.2013
(73) Patentinhaber: Oechsler Aktiengesellschaft, 91522 Ansbach (DE)
(72) Erfinder: LENZ, Matthias, 96515 Sonneberg (DE); OPPERMANN, Michael, 91522 Ansbach (DE); SCHMIDT, André, 91522 Ansbach (DE)
(74) Vertreter: Führing, Dieter
(86) Internationale Anmeldenummer: PCT/EP2011/003423
(87) Internationale Veröffentlichungsnummer: WO 2012/016626

(56) Entgegenhaltungen:
- EP-A2- 0 600 735
- DE-A1- 19 652 081
- DE-A1- 19 753 719
- GB-A- 1 346 139
- US-A- 2 593 818
- US-A- 3 240 741
- US-A- 5 342 291
- UHLMANN D R ET AL: "Sol-gel derived coatings on glass", JOURNAL OF NON-CRYSTALLINE SOLIDS, NORTH-HOLLAND PHYSICS PUBLISHING. AMSTERDAM, NL, Bd. 218, 1. September 1997 (1997-09-01), Seiten 113-122, XP004095561, ISSN: 0022-3093, DOI: 10.1016/S0022-3093(97)00162-2

## Beschreibung

Die Erfindung betrifft ein Verfahren zum Herstellen eines Faserverbundwerkstoffes und einen Faserverbundwerkstoff als Vormaterial für ein Umformteil, wie es etwa als Teil eines Sportartikels, als Dekorelement im Innern von Personenwagen gehobener Ausstattung oder als Batteriedeckel bzw. sonstige Gehäuseschale eines Mobiltelefons oder sonstigen elektronischen Konsumartikels ausgebildet wird.

Die US 2006/0216469 A1 beschreibt eine flache derartige Gehäuseschale aus einem tiefgezogenen dünnen, zur mechanischen Verstärkung insbesondere Carbonfasern aufweisenden, beidseitig mit thermoplastischen Folien kaschierten Gewebe. Das ist, nach seiner Verformung, in einer Spritzguss-Form in zwei aufeinander folgenden Schritten unter gleichzeitigem Anformen von Funktionselementen beidseitig mit thermoplastischem Material hinterspritzt worden; wodurch die Stärke der Gehäuseschale auf das Unförmige etwa Dreifache ihrer ursprünglichen Dicke anwächst.

An ein derartiges, insbesondere in Tiefziehverfahren erstelltes Umformteil werden in der Praxis vielfach einander widersprechende Anforderungen gestellt. Insbesondere soll es trotz extrem flacher Ausbildung außerordentlich biege- und verwinddungssteif sein, und das bei gefälligem Aussehen und hervorragender Haptik aber niedrigen Material- und Herstellungskosten. Das Äußere soll durch eine vorgebbare Einfärbung bestechen, aber eine markante Faserstruktur eines laminierten Verstärkungsgewebes soll doch - insbesondere wenn es sich nicht um einfache Gelege sondern um Gewebe bestimmter Musterauslegungen handelt - weiterhin signifikant in Erscheinung treten.

Vorliegend wird zur Vereinfachung der Darstellung stets nur von faserverstärkenden Geweben gesprochen, die im Rahmen vorliegender Erfindung gleichermaßen ein- oder mehrlagig sowie auch als Gewirke, Gelege, Faserstränge (Rovings), Filze und dergleichen Matten ausgelegt sein können. Stets handelt es sich um, zumeist definiert orientierte, Faserstrukturen, die z.B. beidseitig mit durchsichtigem duroplastischem oder, vorzugsweise, thermoplastischem Kunststoff zu einem beliebigen Faserverbundwerkstoff, gegebenenfalls auch zu einem so genannten Organoblech, laminiert sind.

Vor allem bei gesteigerten mechanischen Anforderungen an faserverstärkte thermoplastische Umformteile liegt es an sich nahe, für das Verstärkungsgewebe auf Karbon-Fasern zurückzugreifen. Die weisen nicht nur besonders hohe Festigkeit auf, als Umformteil liefert ihre Gewebestruktur auch angenehme Haptik und edles Aussehen. Solche Umformteile sind aber wegen der elektrisch leitenden Eigenschaften von Karbon und des daraus resultierenden Abschirmverhaltens nicht bei Geräten einsetzbar, in die z.B., etwa wie bei Mobiltelefonen, eine Funkantenne integriert ist. Dieses Manko zu schlechter Isoliereigenschaften für elektronische Anwendungen ist bei den ebenfalls außerordentlich festen Kevlar- bzw. Aramid-Fasern zwar nicht gegeben; aber infolge deren Bedarfes etwa für Schutzhelme und für schusssichere Westen sind solche Gewebe zu für Konsumgüter vertretbaren Preisen kaum verfügbar.

Deshalb bleibt zumeist nur der Rückgriff auf thermoplastische Laminate mit den herkömmlichen Glasfaser-Verstärkungsgeweben, die, insbesondere mehrlagig, auch sehr gute mechanische Festigkeiten zeigen. Allerdings ist das Aussehen der daraus erstellten glasigfarblosen Umformteile überhaupt nicht ansprechend und deshalb - zumal im Vergleich zu Karbon-Umformteilen - insbesondere für Einsatz bei höherpreisigen Konsumgütern ungeeignet. Man kann die einzelnen Glasfasern auch nicht einfärben, um dadurch dem späteren Gewebe und den daraus erstellten Umformteilen ein wertigeres Aussehen zu vermitteln, weil die Fasern, bedingt durch die Oberflächenstruktur monolithischer Materialien, praktisch keine Farbe annehmen.

Schon in der US-PS 2,593,818 wird berichtet, dass es wegen der inerten glatten Oberfläche von Glasfasern praktisch nicht möglich ist, darauf Farbstoffe haften zu lassen. Als Ausweg wird angegeben, Glasfasern dadurch einzufärben, dass metallische Oxide unter definiertem Temperatureinfuß mit der Oberfläche von Glasfasern reagieren; wobei nach solchem Wärmeprozess eine Behandlung mit einer Organosiliciumkomponente folgen sollte. Wegen der gleichen Problematik, Glasfasern nicht einfärben zu können, wird in der US-PS 3,240,741 für licht-, wasch- und abriebfeste, nicht-abfärbende farbige Glasfasergewebe in Stoffen und Tuchen für Vorhänge und Drapierungen vorgeschlagen, farbspezifische metallische Verbindungen in Wasser zu dispergieren und dadurch haftfähig an Glasfaseroberflächen zu machen, dass diese Emulsion mit Bindemitteln in Form von ausgesuchten Organosiliciumverbindungen in einem Gemisch mit einem speziellen harzartigen Latex, zusätzlich zu üblichen Weichmachern sowie Gleit- und Mattierungsmitteln, versetzt wird. Die auf dem Deckblatt vorliegender Schrift zitierte Veröffentlichung aus dem Journal of Non-Crystalline Solids (218 / 1997, 113-122) referiert, dass nach über siebzigjähriger Forschungstätigkeit der so genannte Sol-Gel-Prozess nun zu industriellem Einsatz gelangt sei, nämlich insbesondere zum Präparieren von Materialien, die an sich nicht beschichtet werden können. Auch die GB 1 346 139 A behandelt das Problem, die Oberflächen von Glasfasern oder von Mischfasern aus Glas- und organischen Fasern an sich nicht einfärben zu können - wenn nicht der hohe technologische Aufwand z.B. für ein Aktivieren der Oberflächen durch Einwirken energiereicher Bestrahlung getrieben wird. Vorgeschlagen wird dann eine offenbar nicht weniger aufwändige Thermoschockbehandlung zum Aktivieren von Faseroberflächen mittels eines kurzzeitig unter bis zu 30.000°C darauf einwirkenden Plasmastrahles; woraufhin diese so oberflächen-aktivierten, und gegebenenfalls zugleich entschlichteten, Fasern zu rascher Abkühlung ins Färbebad oder in einen Färbeflottenstrahl übergeben werden.

Etwas anderes stellt es dar, gemäß der DE 1 97 53 719 A1 für z.B. Wohnwagen-Innenverkleidungen ein Oberflächenmaterial auszubilden. Dafür wird ein bevorzugt weitmaschiges, neutralfarbiges Glasfasergewebe mit haftungsfördernder Oberflächenbehandlung auf einen Träger geklebt und überstrichen, woraufhin eine glänzende Schutzlackschicht auf diesen Farbanstrich aufgebracht wird.

Zwar lässt sich, statt einzelner Fasern, ein Glasfaser-Gewebe insgesamt, vor seinem Laminieren, durch Tauchen in ein Farbbad vollständig mit Farbe überziehen, die sich dann mit ihrem Eintrocknen auf der unebenen Gewebestruktur hält; aber dann sind diese Unebenheiten weitgehend mit Farbe vollgelaufen, so dass nach dem Trocknen des Farbbelages die nun nivellierte Gewebestruktur kaum noch wie gewünscht gestalterisch und haptisch in Erscheinung tritt - jedenfalls nicht mehr haptisch ansprechend und auch nicht mehr visuell als Designbeitrag; die innere Gewebestruktur ist äußerlich verloren gegangen. Außerdem muss der eingetrocknet matte Farbauftrag anschließend noch eine metallische Glanzbedampfung erfahren, was zusätzlich die Nachteile der elektrisch leitfähigen Metallisierung zur Folge hat.

In Erkenntnis solcher Gegebenheiten liegt vorliegender Erfindung die technische Problemstellung zugrunde, bei einem glasfaserverstärkten Umformteil ohne spürbare Beeinträchtigung der haptischen Eigenschaften und der visuellen Erscheinung dessen Faserstruktur diese in unterschiedlich vorgebbaren Farben und dabei insbesondere auch im höherwertigen, schwarzgrauen Karbonschimmer aufscheinen zu lassen.

Diese Aufgabe ist erfindungsgemäß durch die im unabhängigen Patentanspruch angegebenen wesentlichen Merkmale gelöst. Danach wird das Faser-Gewebe des späteren Verbundwerkstoffes mit einem farbpigmentierten Lack bei Lösungsmittel-Überschuss besprüht, nämlich einem wie er, auch als Porzellanfarbe bezeichnet, zu farbbrilliantem Veredeln von Gegenständen aus Glas oder aus Metall durch kratzfestes Bedrucken deren Oberflächen eingesetzt wird. Der dadurch auf dem Gewebe einseitig oder beidseitig punktuell relativ dicht erzielte, z.B. kundenspezifisch farbige, Niederschlag wird dann nach Art einer Lackaushärtung thermisch fixiert, ehe die Matte in herkömmlicher Weise durchsichtig oder durchscheinend laminiert wird. Das Erfordernis einer metallischen Glanzbedampfung des Farbauftrages (wie nach dem herkömmlichen Farb-Tauchen) entfällt bei dieser Sprüheinfärbung.

Solches ein- oder auch beidseitiges Aufsprühen von Lack mit Farbpigmenten in Lösungsmittel-Überschuss führt also nicht zu einem über die Oberfläche praktisch geschlossenem Farbauftrag, sondern eher zu mehr oder weniger dicht vorgebbarem, längs der Struktur der Gewebeoberfläche haftendem punktuellem Niederschlag der Farbpigmente, ohne die strukturellen Gewebeunebenheiten einzuebnen. Beim Betrachten des Faserverbundwerkstoffes mit zuvor derart besprühtem Gewebe, insbesondere unter Lichteinfall darauf, tritt im Innern des Verbundwerkstoffes keine Absorption wie auf einer durch Tauchen eingeebneten und matt eingefärbter Oberfläche auf; und auch keine flächige Reflexion auf noch schwach welliger und nach Metallisieren glänzender Oberfläche; sondern nach Maßgabe der Intensität des aufgesprühten Lackes und der Brillanz seiner Farbpigmente wird gewissermaßen das Streulicht einer Vielzahl punktueller Lichtquellen von den Oberflächen der einzelnen Fasern aus dem Innern der laminierten Gewebestruktur heraus abgestrahlt. Das erbringt ohne metallische Bedampfung den angestrebten farbbrillanten Glanzeffekt, und das unter Aufrechterhalten der visuellen und haptischen Eigenschaften der Gewebestruktur am später aus diesem Verbundwerkstoff erstellten Umformteil.

So lassen sich Umformteile aus Verbundwerkstoffen auch mit dem preiswert verfügbaren Glasfaser-Gewebe in unterschiedlichsten brillanten Farben und Farbkombinationen unter Beibehalten einer signifikanten Gewebe-Struktur erzielen. Für die Fertigung wird das Gewebe von einer Vorratsspule abgezogen und durch eine einseitig oder beidseitig darauf einwirkende Spritzkabine zum Besprühen mit Farbpigmenten in Lösungsmittel-Überschuss geführt, sowie anschließend etwa durch einen Tunnelofen wie er zur Lackaushärtung im industriellen Einsatz ist, um abschließend als die ohne Beeinträchtigung der Erscheinung ihrer Gewebestruktur brillant eingefärbte Gewebebahn wieder aufgehaspelt zu werden.

Wenn das Aufsprühen des Farbniederschlages nicht derart großflächig in einer Spritzautomatenkabine oder etwa mit einer Spritzpistole erfolgt, sondern graphisch gezielt berandet mittels einer Düse etwa nach Art des Schreibkopfsystemes von Tintenstrahldruckern, dann lassen sich auf das noch unbeschichtete Gewebe auch beispielsweise mehrfarbige Ornamente, Logos oder Beschriftungen aufbringen, die nach dem durchsichtigen oder durchscheinenden Laminieren, und nach dem Umformen zum Gebrauchsgegenstand, auf dessen strukturierter und dadurch haptisch besonders hochwertiger Oberfläche in beliebigen Farbkombinationen prägnant in Erscheinung treten. Für ein solches Bedrucken bedarf es nicht des konstruktiven Aufwandes eines komplexen Tintenstrahldruckers, wie er in der EP 0 600 735 A2 beschrieben ist. Es genügt ein Industriedrucker, wie er gemäß der US 5,342,291 A zum Beschriften eines synthetischen Steifverbandes aus wenigstens einer streifenförmigen Lage eines kunstharzgetränkten, nicht-verwebten Glasfasermaterials eingesetzt wird, bevor darauf ein dann aushärtendes Harz aufgebracht wird.

Um einen als faserverstärktes Vormaterial für Tiefzieh-Umformteile dienenden leichten Hochleistungs-Faserverbundwerkstoff ohne Metallisierung kundenspezifisch brillant einzufärben, ohne dadurch das haptisch hochwertige Erscheinen seines Faser-Gewebes zu beeinträchtigen, wird das Gewebe also erfindungsgemäß vor seinem Laminieren vollflächig oder graphisch begrenzt mit Glanzlack besprüht. Die sich dadurch dicht punktuell auf dem Verlauf der Faseroberflächen des Gewebes niederschlagenden Pigmente werden dann thermisch ausgehärtet, ehe das so eingefärbte Gewebe zu tafelförmigem oder kontinuierlichem Faserverbundwerkstoff als Vormaterial für einen etwa thermisch umzuformenden Gegenstand laminiert wird.

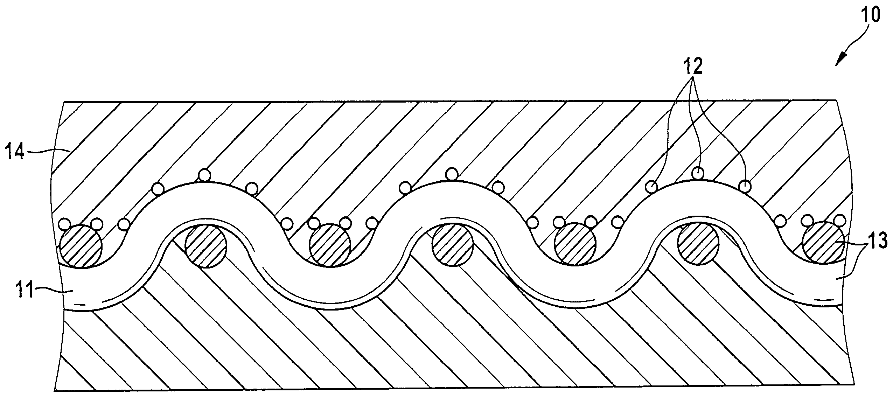

Zu näherer Veranschaulichung des erfindungsgemäß eingefärbten Faserverbundwerkstoffes wird auf nachstehende Beschreibung eines in der Zeichnung skizzierten bevorzugten Ausführungsbeispieles verwiesen.

In der einzigen Zeichnungsfigur ist stark vergrößert und nicht maßstabgerecht in abgebrochener Schnittdarstellung ein Verbundwerkstoff 10 mit einlagigem Faser-Gewebe 11 skizziert, dessen Kett- und Schussfasern 13 hier zu einer Leinenstruktur verwoben sind. Bei den Verstärkungsfasern 13 handelt es sich in der Regel um Glasfasern, aber auch andere Materialien wie Aramidfasern können erfindungsgemäß unter farbbrillanter Erscheinung der Gewebestruktur aber ohne Auswirkung auf elektrische Funktionen eingefärbt sein. Das Gewebe 11 wurde, hier einseitig, mit einem farbigen Glanzlack besprüht. Das ergab einen der Gewebestruktur folgenden, hier übertrieben diskontinuierlich skizzierten Niederschlag brillanter da feinkörniger Farbpigmente 12 auf den miteinander verwobenen Fasern 13.

Bei dem Glanzlack handelt es sich bevorzugt um ein Sol-Gel-Hybridlacksystem, wie es etwa, nach Verdampfen des Beschichtungs-Lösungsmittels im aufgesprühten Hydrolyse-Sol, als hochvernetzter Klarlack-Gelfilm als dekorative, kratzfeste Schutzschicht auf Glasflächen oder als schmutzabweisende Beschichtung auf Sanitärkeramik zum Einsatz kommt. Das Sol ist im Rahmen vorliegender Erfindung aber mit sehr feinkörnigen und besonders farbintensiven Pigmenten 12 dotiert, die bei der abschließenden, thermisch geförderten Kondensation des Sol zum Gel, der Gewebestruktur folgend, auf den Faseroberflächen gut haften bleiben.

Die auf dem Gewebe 11 im Gel gebundenen Pigmente 12 wurden, nach kurzzeitigem Antrocknen, zum Stabilisieren auf den Faseroberflächen unter Förderung der Kondensationsreaktion vom Sol zum Gel etwa in einem Infrarot-Durchlaufofen bei einer Temperatur in der Größenordnung von ca. 180°Celsius gehalten und dann langsam abgekühlt. Daraufhin erfolgte in üblicher Weise das wenigstens einseitige, gewöhnlich beidseitige Laminieren des so eingefärbten Gewebes 11 zum Faserverbundwerkstoff 10 mit einer Matrix 14 aus einem an dem Gewebe 11 gut haftenden, durchsichtigen oder durchscheinenden Kunststoff wie Polyamid, oder auch Polypropylen oder Polyurethan.

Die Bahnen- oder Bogenware des so z.B. kundenspezifisch eingefärbten Faserverbundwerkstoffes kann produktspezifisch zugeschnitten werden, etwa für thermisches Tiefziehen zu einem hochfesten Umformteil wie dem sehr dünnen und flachen aber flächensteifen und infolge seiner oberflächigen Gewebestruktur haptisch wie visuell ansprechenden Batteriedeckel oder dergleichen funk- und elektronikverträglichen flachen Gehäuseschale eines elektrischen Konsumgerätes.

## Patentansprüche

1. Verfahren zum Herstellen eines Faserverbundwerkstoffes (10) mit einer ein- oder beidseitig zu laminierenden Gewebebahn als Vormaterial für ein in einem Tiefziehverfahren zu erstellendes, dünnes aber dennoch biege- und verwindungssteifes Umformteil, **gekennzeichnet durch** Besprühen eines Glasfaser-Gewebes (11) mit einem farbpigmentierten Glanzlack, wie er auch als Porzellanfarbe bezeichnet wird, zu punktuellem Niederschlag der Farbpigmente in Lösungsmittel-Überschuss ohne Einebnen der strukturellen Gewebeunebenheiten, woraufhin der Glanzlack thermisch fixiert wird, ehe dieses nun brillant eingefärbte Gewebe (11) mit durchsichtigem oder durchscheinendem Kunststoff, durch den hindurch die Gewebestruktur visuell und haptisch in Erscheinung tritt, laminiert wird.

2. Verfahren nach dem vorangehenden Anspruch, **dadurch gekennzeichnet, dass** der Lack graphisch berandet auf das Gewebe (11) gesprüht wird.

3. Verfahren nach dem vorangehenden Anspruch, **dadurch gekennzeichnet, dass** ein Farbniederschlag mittels einer Düse etwa nach Art des Schreibkopfsystemes eines Tintenstahldruckers erfolgt.

4. Verfahren nach einem der vorangehenden Ansprüche, **dadurch gekennzeichnet, dass** das Gewebe (11) unter Einsatz von Farbpigmenten in Lösungsmittel-Überschuss mit der auch so genannten Porzellanfarbe der Art, wie sie insbesondere zum Bedrucken von Gegenständen aus Glas oder Metall Verwendung findet, besprüht wird.

5. Verfahren nach einem der vorangehenden Ansprüche, **dadurch gekennzeichnet, dass** das Gewebe (11) mit farbpigmentversetztem Sol eines Sol-Gel-Lacksystemes besprüht wird.

6. Verfahren nach einem der vorangehenden Ansprüche, **gekennzeichnet durch** Aushärten des Lackes in einem Tunnelofen.

7. Faserverbundwerkstoff (10), erhalten durch das Verfahren nach einem der vorangehenden Patentansprüche, **dadurch gekennzeichnet, dass** die Oberflächen der Fasern (13) seines visuell und haptisch durch ein Laminat aus durchsichtigem oder durchscheinendem Kunststoff in Erscheinung tretenden Gewebes (11) einen diskontinuierlichen Niederschlag von unter Lichteinfall Streulicht abstrahlenden punktuellen Lichtquellen in Form brillanter feinkörniger Farb-Pigmente (12) von Porzellanfarbe tragen.

8. Aus einem Zuschnitt des Faserverbundwerkstoffes (10) nach dem vorangehenden Patentanspruch tiefgezogenes flaches, haptisch ansprechendes und kundenspezifisch einfärbbares Umformteil, insbesondere Gehäuseschale eines elektronischen Gerätes, Sportartikel oder Kraftfahrzeug-Dekorelement.

## Claims

1. Method for producing a fibre composite material (10) having a woven fabric web, to be laminated on one or both sides, as a starting material for a thin but nevertheless flexurally and torsionally rigid formed part to be created in a thermal forming process, **characterized by** spraying a woven glass fibre fabric (11) with a colour-pigmented gloss lacquer, also referred to as porcelain colour, for the point-type precipitation of the colour pigments in excess solvent without levelling the structural woven-fabric irregularities, whereupon the gloss lacquer is thermally fixed before this then brilliantly dyed woven fabric (11) is laminated with transparent or translucent plastic, through which the structure of the woven fabric can be seen and felt.

2. Method according to the preceding claim, **characterized in that** the lacquer is sprayed onto the woven fabric (11) in a graphically defined fashion.

3. Method according to the preceding claim, **characterized in that** a colour deposit is carried out using a nozzle, for example in the manner of the writing head system of an ink-jet printer.

4. Method according to one of the preceding claims, **characterized in that** what is also referred to as porcelain colour of the type as is used in particular for printing on objects made of glass or metal is sprayed onto the woven fabric (11) using colour pigments in solvent excess.

5. Method according to one of the preceding claims, **characterized in that** sol, to which colour pigments are added, of a sol-gel lacquer system is sprayed onto the woven fabric (11).

6. Method according to one of the preceding claims, **characterized by** curing of the lacquer in a tunnel kiln.

7. Fibre composite material (10), obtained by the method according to one of the preceding patent claims, **characterized in that** the surfaces of the fibres (13) of its woven fabric (11) that can be seen and felt through a laminate of transparent or translucent plastic carry a discontinuous deposit of point-type light sources which emit scattered light under the incidence of light and are in the form of brilliant fine-grained colour pigments (12) of porcelain colour.

8. Flat formed part, which is thermoformed from a blank of the fibre composite material (10) according to the preceding patent claim, is haptically appealing and can be dyed in a customer-specific manner, in particular housing shell of an electronic device, a sports article or embellishment for a motor vehicle.

## Revendications

1. Procédé de fabrication d'un matériau composite renforcé par des fibres (10) comportant une bande de tissu devant être stratifiée sur une ou deux faces en tant que matériau de départ destiné à une pièce façonnée devant être réalisée par un procédé d'étirage profond, mince, mais néanmoins résistante à la flexion et à la déformation, **caractérisé par** le fait d' asperger sur un tissu de fibres de verre (11) un vernis brillant à pigments colorés, qui est également connu sous le nom de colorant de porcelaine, afin de provoquer une précipitation ponctuelle des pigments colorés dans un solvant en excès sans nivellement des irrégularités structurelles du tissu, cela ayant pour résultat de fixer thermiquement le vernis brillant, avant que ledit tissu (11) maintenant coloré de manière brillante soit stratifié avec une matière plastique transparente ou translucide, à travers laquelle la structure du tissu apparaît visuellement et de manière haptique.

2. Procédé selon la revendication précédente, **caractérisé en ce que** le vernis est pulvérisé de façon délimitée graphiquement sur le tissu (11).

3. Procédé selon la revendication précédente, **caractérisé en ce qu'**une précipitation du colorant est effectuée au moyen d'une buse sensiblement à la façon d'une tête d'écriture d'une imprimante à jet d'encre.

4. Procédé selon l'une quelconque des revendications précédentes, **caractérisé en ce que** le tissu (11) est soumis à une pulvérisation par utilisation de pigments colorés dans un excès de solvant en utilisant le colorant dit de porcelaine selon une technique telle que celle utilisée notamment pour effectuer une impression sur des objets constitués de verre ou de métal.

5. Procédé selon l'une quelconque des revendications précédentes, **caractérisé en ce que** le tissu (11) est soumis à une pulvérisation d'un sol d'un système de sol-gel-vernis auquel un pigment coloré est ajouté.

6. Procédé selon l'une quelconque des revendications précédentes, **caractérisé par** le durcissement du vernis dans un four tunnel.

7. Matériau composite renforcé par des fibres (10), obtenu par un procédé selon l'une quelconque des revendications précédentes, **caractérisé en ce que** les surfaces des fibres (13) de son tissu (11), apparaissant visuellement et haptiquement à travers un stratifié constitué d'une matière plastique transparente ou translucide, portent un précipité discontinu de sources lumineuses ponctuelles rayonnant de la lumière diffuse lorsqu'elles sont exposées à de la lumière, sous la forme de pigments colorés (12) brillants à grain fin de colorant de porcelaine.

8. Pièce façonnée pouvant être colorée, obtenue par étirage profond, plane, présentant une réponse haptique et personnalisée, constituée d'une section du tissu renforcé par des fibres (10) selon la revendication précédente, en particulier une coque d'un appareil électronique, d'un article de sport ou d'un élément de décor pour véhicule automobile.
